# EUROPEAN PATENT APPLICATION

(11) **EP 4 797 366 A1**
(43) Date of publication of application: **26.08.2026**
(21) Application number: 26151333.7
(22) Date of filing: 12.01.2026
(51) Int. Cl.: H01M 10/04, H01M 10/0587, H01M 50/463

(54) **ELECTRODE ASSEMBLY AND RECHARGEABLE BATTERY INCLUDING THE SAME**

(30) Priority: 25.02.2025 KR 20250024319
(71) Applicant: SAMSUNG SDI CO., LTD., Yongin-si, Gyeonggi-do 17084 (KR)
(72) Inventor: SONG, Won Joon, 16678 Suwon-si, Gyeonggi-do (KR)
(74) Representative: Michalski Hüttermann & Partner mbB

(57) **Abstract**

An electrode assembly and a battery including the same are disclosed. An electrode assembly is formed by winding a laminate having a separator interposed between a positive electrode plate and a negative electrode plate a plurality of times to have a winding center, wherein a cutting shape at a winding end portion of the separator has a shape in which an upper end is removed.

## Description

### BACKGROUND

### 1. Field

The present disclosure relates to an electrode assembly, and to a battery including the electrode assembly.

### 2. Discussion of Related Art

Secondary batteries typically can be charged and discharged, unlike primary batteries that cannot be recharged. Low-capacity secondary batteries (hereinafter, simply referred to as 'batteries') are used in portable small electronic devices such as, e.g., smartphones, feature phones, laptop computers, digital cameras, and camcorders, while high-capacity secondary batteries are widely used as power sources for, e.g., motor driving in hybrid vehicles, electric vehicles, and the like, and batteries for power storage, or the like. These batteries include electrodes including a positive electrode and/or a negative electrode, an electrode assembly including the electrodes, a case accommodating the electrode assembly, an electrode terminal connected to the electrode assembly, and the like.

As technology advances, high-capacity batteries are required. Accordingly, a plurality of batteries may be used by being electrically connected to each other. For example, the batteries can be applied to electronic devices in the form of a battery module including a plurality of batteries and/or a battery pack including a plurality of battery modules. Depending on the implementation, a battery pack may include a plurality of batteries. In this case, the electronic devices are electronic devices requiring high output and/or high capacity and include, for example, electric vehicles and the like.

The battery includes an electrode assembly that constitutes a unit structure for performing charging and discharging operations of power. The electrode assembly has a structure in which a separator is interposed between a positive electrode plate and a negative electrode plate. Unlike the positive electrode plate or the negative electrode plate including a metal substrate, a separator formed of or including a polymer or the like is likely to shrink in a high temperature environment. In consideration of shrinkage, the separator is generally manufactured to have a larger size than the positive electrode plate or the negative electrode plate, and the larger portion than the positive electrode plate or the negative electrode plate is referred to as an overhang portion. Due to the overhang portion, it is possible to reduce or prevent contact between the positive electrode plate and the negative electrode plate even though the contraction of the separator has progressed to some extent.

A coin-type battery typically includes a jelly roll type electrode assembly. The jelly roll type electrode assembly may be made by winding a laminate of a sheetshaped positive plate/separator/negative plate/separator having a relatively long length compared to a width a plurality of times in a clockwise or counterclockwise direction. The coin-type battery may be manufactured by inserting the jelly roll type electrode assembly into a can of which an upper side is open, and then arranging an cap assembly on an upper end of the can and joining the same by welding or the like. In addition, in the jelly roll type electrode assembly, the separator is larger than the positive electrode plate or the negative electrode plate and has an overhang portion.

However, when the cap assembly is disposed on the upper end of the can in which the jelly roll type electrode assembly is inserted and the coupling surface is welded, the overhang portion of the separator may interfere with the cap assembly. As a result, pressure is applied to the separator, and thus the separator may be damaged or a defect such as a pinhole may occur on a joining surface between the can and the cap assembly.

### SUMMARY

The present disclosure describes a jelly roll type electrode assembly capable of reducing or preventing interference between an overhang portion of a separator and a cap assembly, and a battery including the electrode assembly.

However, technical problems to be addressed by the present disclosure are not limited to the challenges described above, and other challenges that are not described may be clearly understood by those skilled in the art from the description of the disclosure described below.

According to an example embodiment of the present disclosure, an electrode assembly is formed by winding a laminate having a separator interposed between a positive electrode plate and a negative electrode plate a plurality of times to have a winding center, wherein a cutting shape at a winding end portion of the separator has a shape in which an upper end is removed.

According to one aspect of the example embodiment, the cutting shape may have a shape in which an upper portion of the separator is removed in a curved line.

According to another aspect of the example embodiment, the cutting shape may have a shape in which an upper portion of the separator is removed in a straight line. For example, the cutting shape may have a shape in which an edge portion is removed only from an upper end.

According to still another aspect of the example embodiment, the cutting shape may have a shape in which a lower end of the winding end portion of the separator is also removed. For example, the cutting shape may have a shape that is vertically symmetrical based on a width direction of the separator. In this case, the cutting shape may have a shape in which the central portion is more convex than the upper end and the lower end in the width direction of the separator.

For example, the cutting shape may have a shape in which each of an upper portion and a lower portion of the separator is removed in a curved line. Alternatively, the cutting shape may have a shape in which each of an upper portion and a lower portion of the separator is removed in a straight line. In this case, the cutting shape may have a shape in which an edge portion is removed from each of the upper end and the lower end.

According to another example embodiment of the present disclosure, an electrode assembly is formed by winding a laminate having a separator interposed between a positive electrode plate and a negative electrode plate a plurality of times to have a winding center, wherein the separator has an overhang portion with respect to the positive electrode plate and the negative electrode plate in a longitudinal direction, and a width of an upper end of the overhang portion is smaller than a width of a central portion.

According to one aspect of the example embodiment, a width direction boundary portion of the overhang portion may have a curved cutting shape near the upper end.

According to another aspect of the example embodiment, a width direction boundary portion of the overhang portion may have a straight cutting shape near the upper end. For example, the overhang portion may have a cutting shape in which an edge portion is removed only from an upper end of the central portion.

According to still another aspect of the example embodiment, a width of a lower end of the overhang portion may be smaller than the width of the central portion. For example, a width direction boundary portion of the overhang portion may have a cutting shape that is vertically symmetrical based on a width direction of the separator. In this case, the width direction boundary portion of the overhang portion may have a curved cutting shape in which the central portion is more convex than an upper portion and a lower portion in the width direction of the separator.

Alternatively, the width direction boundary portion of the overhang portion may have a straight cutting shape in which the central portion is more convex than the upper portion and the lower portion in the width direction of the separator. For example, the overhang portion may have a shape in which an edge portion is removed from each of the upper end and the lower end.

According to still another example embodiment of the present disclosure, a battery includes a can having a cylindrical shape and an opening having an open upper side, an electrode assembly formed by winding a laminate having a separator interposed between a positive electrode plate and a negative electrode plate a plurality of times to have a winding center, and a cap assembly joined to an upper end of the can to cover the opening, wherein a cutting shape at a winding end portion of the separator has a shape in which an upper end is removed.

### BRIEF DESCRIPTION OF THE DRAWINGS

The following drawings attached to the present specification illustrate example embodiments of the present disclosure and further describe aspects and features of the present disclosure together with the detailed description of the present disclosure. Thus, the present disclosure should not be construed as being limited to the drawings, in which:
FIG. 1 is a perspective view schematically illustrating a configuration of a coin-type battery according to one example embodiment;
FIG. 2 is a schematic cross-sectional view taken along line II-II of FIG. 1;
FIG. 3 is a front view schematically illustrating a configuration of a conventional jelly roll type electrode assembly;
FIG. 4 is a front view schematically illustrating a configuration of an electrode assembly according to one example embodiment;
FIG. 5 is a front view schematically illustrating a configuration of an electrode assembly according to another example embodiment;
FIG. 6 is a front view schematically illustrating a configuration of an electrode assembly according to still another example embodiment; and
FIG. 7 is a front view schematically illustrating a configuration of an electrode assembly according to yet another example embodiment.

### DETAILED DESCRIPTION

Hereinafter, example embodiments of the present disclosure are described in detail with reference to the attached drawings. Terms or words used in this specification and claims should not be interpreted as being limited to ordinary or dictionary meanings and should be interpreted as meanings and concepts consistent with the technical idea of this disclosure based on the principle that the concept of the term can be defined in order to describe the disclosure as intended. Accordingly, it is to be understood that the example embodiments described herein, and the configurations illustrated in the drawings are only some of the example embodiments of the disclosure and do not represent all of the technical ideas of the disclosure, and that there may be various equivalents and modifications that may replace the example embodiments at the time of filing this application. Furthermore, when used herein, the terms "comprise or include" and/or "comprising or including" specify the presence of the mentioned shapes, numbers, steps, operations, members, elements, and/or groups thereof and are not intended to exclude the presence or addition of one or more other shapes, numbers, operations, members, elements, and/or groups thereof. Further, when the example embodiments of the present disclosure are described, "may do" and/or "may be" may include "one or more example embodiments of the present disclosure."

In addition, in order to help understand the disclosure, the attached drawings are not drawn to actual scale, and the dimensions of some components may be exaggerated. In addition, the same reference numbers may be assigned to the same components in different embodiments.

The statement that two objects for comparison are "equal" means "substantially the same." Therefore, substantially the same may include deviations that are considered low in the art, for example, deviations of less than 5%. Additionally, uniformity of a parameter over a given region may mean uniformity from an average perspective.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When any component is disposed "on (or under)" a component or "above (or below)" a component, it may mean not only that any component is disposed in contact with the component, but also that another component may be interposed between the component and any component disposed on (or under) the component.

In addition, when a component is described as being "connected," "coupled," or "linked" to another component, it is to be understood that the components may be directly coupled or connected to one another, but that other components may be "interposed" between the components, or that each component may be "connected," "coupled," or "linked" through another component. In addition, when a portion is "electrically coupled" to another part, this includes not only the case where it is "directly connected" but also the case where it is "connected" with another member or element interposed therebetween.

Whenever reference is made throughout the specification to "A and/or B," this means A, B, or "A and B," unless otherwise specified. That is, "and/or" includes all or any combination of a plurality of listed items. When "C to D" is described, this means C or more and D or less, unless otherwise specified.

When "C to D" is stated, it means greater than or equal to C and less than or equal to D unless otherwise specifically stated. When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It is understood that, although the terms first, second, third, and the like, may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Therefore, the term "below" can encompass both the upward and downward directions.

The terms used in the present specification are intended to describe the example embodiments of the present disclosure, and are not intended to limit the present disclosure.

When the terms "about" or "substantially" are used in this specification in connection with a numerical value, it is intended that the associated numerical value include a tolerance of ±5% around the stated numerical value. When ranges are specified, the range includes all values therebetween such as increments of 0.1%.

Hereinafter, a secondary battery and a battery pack including the secondary battery according to various example embodiments of the present disclosure are described with reference to the accompanying drawings. In the drawings, thickness of the lines shown in the drawing or the size of the components may be exaggerated for clarity and convenience of explanation. In addition, the terms described below are defined in consideration of the function in the present disclosure, and may vary depending on the intention or custom of the user or operator. Therefore, the definition of these terms should be based on the content throughout the present specification.

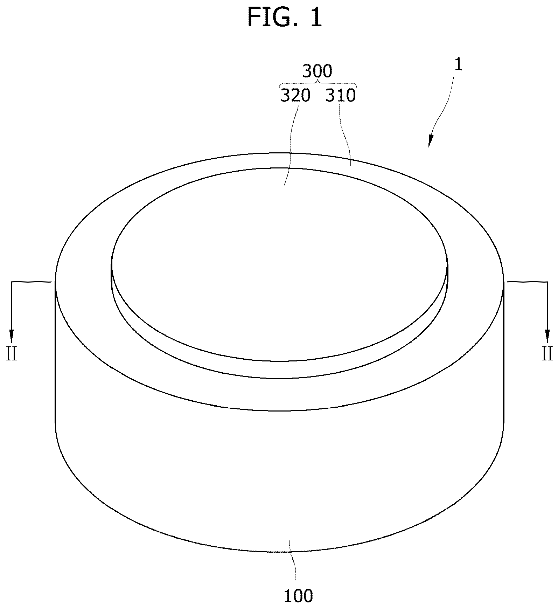

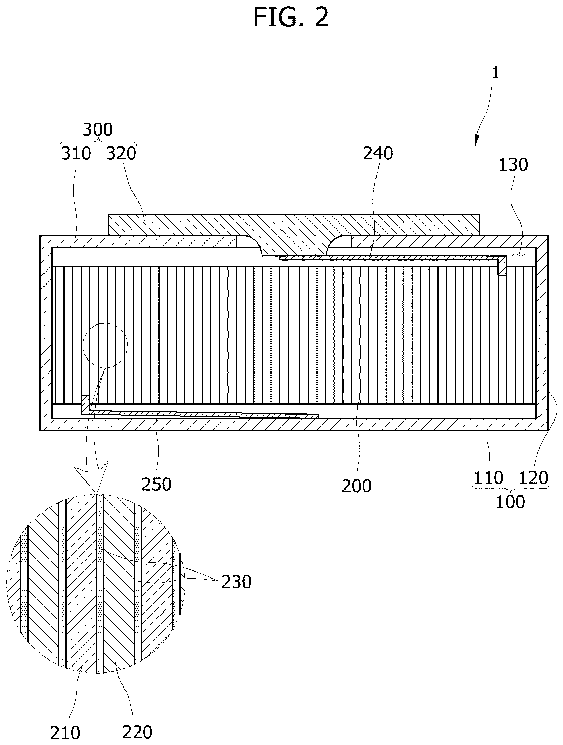

FIG. 1 is a perspective view schematically illustrating a configuration of a battery according to one example embodiment. In addition, FIG. 2 is a schematic cross-sectional view taken along line II-II of FIG. 1. Referring to FIG. 1 and FIG. 2, a battery 1 includes a can 100, an electrode assembly 200, and a cap assembly 300.

The battery 1 according to one example embodiment may be a coin-type battery or a button-type battery. However, the battery 1 is not limited thereto, and the battery 1 may be, e.g., a cylindrical battery or a prismatic battery.

The coin-type battery is a thin coin or button-shaped battery, and may refer to a battery having a relatively small height to diameter ratio. For example, the coin-type battery may have a height to diameter ratio of about 1 or less, but is not limited thereto. In addition, the coin-type battery may have a circular cross-section in a horizontal direction, but this is also an example. For example, the horizontal cross-section of the coin-type battery may be polygonal or elliptical.

The can 100 may form an approximate exterior of the battery 1 and accommodate the electrode assembly 200 therein. The can 100 may be formed of or include a material having rigidity and desired or improved heat transfer characteristics. For example, the can 100 may be formed of or include a material including at least one of steel, stainless steel, aluminum, and an aluminum alloy. Accordingly, the can 100 may protect the electrode assembly 200 from an external impact and perform a heat dissipation function of dissipating heat accompanying the charging and discharging operations of the electrode assembly 200 to the outside.

The can 100 may also be formed of or include an electrically conductive metal material. Accordingly, the can 100 or a cap plate 310 of the cap assembly 300 connected thereto may constitute a terminal of the battery 1.

The can 100 may include a bottom portion 110 and a side wall portion 120. The bottom portion 110 may form an exterior of a lower side of the can 100. The bottom portion 110 may have a substantially circular shape.

The side wall portion 120 may form an exterior of a circumferential surface of the can 100. The side wall portion 120 may have a cylindrical shape extending upward from an edge of the bottom portion 110. The side wall portion 120 may surround the space above the bottom portion 110. The side wall portion 120 may have a planar shape corresponding to the shape of the bottom portion 110, for example, a circular cross-sectional shape in a horizontal direction.

A circumference of the bottom portion 110 may be joined to a lower end portion of the side wall portion 120. The bottom portion 110 may be formed integrally with the side wall portion 120 by a drawing process or the like, or alternatively, may also be joined to the side wall portion 120 by welding or the like, after being manufactured separately from the side wall portion 120.

The can 100 may further include an opening 130 which opens an upper end portion of the side wall portion 120. The opening 130 may provide a path through which the electrode assembly 200 to be described below is inserted into the can 100 in an upper end region of the can 100, and providing a space where the cap assembly 300 to be described below may be installed. The opening 130 may refer to an empty space surrounded by the upper end of the side wall portion 120 located at an opposite side of the bottom portion 110.

The electrode assembly 200 may constitute a unit structure which performs charging and discharging operations of power in the battery 1. The electrode assembly 200 may include a first electrode plate 210, a second electrode plate 220, and a separator 230 disposed between the first electrode plate 210 and the second electrode plate 220.

The electrode assembly 200 may be disposed in the can 100. The electrode assembly 200 may be inserted into the can 100 through the opening 130 of the can 100.

The electrode assembly 200 may have a shape wound in a circular shape around a winding axis. For example, the electrode assembly 200 may have a shape in which the first electrode plate 210, the separator 230, the second electrode plate 220, and the separator 230 are stacked together and wound multiple times clockwise or counterclockwise around the winding axis. Accordingly, the electrode assembly 200 may have a substantially jelly roll shape (cylindrical shape). Here, the winding axis may refer to a straight line passing through the center of the electrode assembly 200. The separator 230 has an overhang portion which makes the separator 230 larger than the first electrode plate 210 and the second electrode plate 220.

The first electrode plate 210 may constitute a positive electrode of the electrode assembly 200. The first electrode plate 210 may have the shape of a foil including a metal material such as aluminum or an aluminum alloy. The type, size, shape, or the like of the first electrode plate 210 is not particularly limited, as long as the first electrode plate 210 has conductivity without causing a chemical change in the battery.

A first active material layer may be applied to at least a part of the first electrode plate 210. The first active material layer may be applied to both surfaces of the first electrode plate 210, or alternatively, may be applied to only one surface of the first electrode plate 210. As the first electrode plate 210 constitutes the positive electrode, the first active material layer may include a positive electrode active material.

The positive electrode active material may be or include a compound capable of reversible intercalation and deintercalation of lithium (lithiated intercalation compound). For example, one or more of composite oxides of lithium and a metal such as or including at least one of cobalt, manganese, nickel, iron, and a combination thereof, may be used or included in the positive electrode active material.

In one example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1 may be satisfied. For example, the positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, LNCM), and may also include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer may further include a positive electrode conductive material. The positive electrode conductive material may impart conductivity to the first active material layer, and any electronically conductive material that does not cause an adverse chemical change may be used. Examples of the positive electrode conductive material may include a carbon-based material such as at least one of natural graphite, artificial graphite, carbon black, acetylene black, Ketjen black, carbon fibers, carbon nanofibers, carbon nanotubes, or the like, a metal-based material in the form of a metal powder or metal fiber containing at least one of copper, nickel, aluminum, silver, or the like, a conductive polymer such as a polyphenylene derivative, or a mixture thereof.

The first active material layer may further include a positive electrode binder. The positive electrode binder attaches particles constituting the positive electrode active material to each other, and also attaches the positive electrode active material to the first electrode plate 210. An example of the positive electrode binder may include a non-aqueous binder, an aqueous binder, a dry binder, or a combination thereof.

Examples of the non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

When the aqueous binder is used as the positive electrode binder, a cellulose-based compound may be further included to impart viscosity. The cellulose-based compound may be used by mixing at least one or more of carboxymethyl cellulose, hydroxypropyl methyl cellulose, methyl cellulose, or alkali metal salts thereof. As the alkali metal, at least one of Na, K, or Li may be included.

The dry binder may be or include a polymeric material capable of being fiberized, for example, at least one of polytetrafluoroethylene, polyvinylidene fluoride, a polyvinylidene fluoride-hexafluoropropylene copolymer, polyethylene oxide, or a combination thereof.

The first electrode plate 210 may be electrically connected to the cap assembly 300, for example, to a terminal plate 320. Since the first electrode plate 210 constitutes the positive electrode of the electrode assembly 200, the terminal plate 320 of the cap assembly 300 may constitute a positive electrode terminal of the battery 1. For example, the first electrode plate 210 may be electrically connected to the terminal plate 320 by a first electrode tab 240. The first electrode tab 240 may be formed of or include a conductive metal material such as at least one of copper, a copper alloy, nickel, or a nickel alloy. The first electrode tab 240 may be disposed at an upper side of the electrode assembly 200, and both end portions of the first electrode tab 240 may be respectively connected to the first electrode plate 210 and the terminal plate 320. One end portion of the first electrode tab 240 may be directly connected to the first electrode plate 210. For example, the first electrode plate 210 may be directly connected to the terminal plate 320 without the first electrode tab 240.

The second electrode plate 220 may constitute a negative electrode of the electrode assembly 200. The second electrode plate 220 may have the shape of a foil including a metal material such as at least one of copper, a copper alloy, nickel, or a nickel alloy. The second electrode plate 220 may face the first electrode plate 210 at a predetermined or desired interval from the first electrode plate 210. The type, size, shape, or the like of the second electrode plate 220 is not particularly limited as long as the second electrode plate has conductivity without causing an adverse chemical change in the battery.

A second active material layer may be applied to at least a part of the second electrode plate 220. The second active material layer may be applied to both surfaces of the second electrode plate 220, or alternatively, may be applied to only one surface of the second electrode plate 220. As the second electrode plate 220 constitutes the negative electrode, the second active material layer may include a negative electrode active material.

The negative electrode active material includes at least one of a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be or include a carbon-based negative electrode active material, for example, crystalline carbon, amorphous carbon, or a combination thereof. Examples of the crystalline carbon may include graphite such as amorphous, plate-like, flaky, spherical, or fibrous natural graphite or artificial graphite, and examples of the amorphous carbon may include at least one of soft carbon or hard carbon, mesophase pitch carbide, calcined coke, and the like.

As the alloy of lithium and a metal, an alloy of lithium and a metal such as or including at least one of Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or Sn-based negative electrode active material may be used. The Si-based negative electrode active material may be or include at least one of silicon, a silicon-carbon composite, SiOₓ (x is 1 or 2), an Si-Q alloy (Q is or includes at least one of an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to one example embodiment, the silicon-carbon composite may be in the form of silicon particles whose surfaces are coated with amorphous carbon. For example, the silicon-carbon composite may include a secondary particle (a core) in which silicon primary particles are assembled, and an amorphous carbon coating layer (a shell) located on the surface of the secondary particle. The amorphous carbon may also be located between the silicon primary particles, and for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer located on a surface of the core.

The Si-based negative electrode active material or Sn-based negative electrode active material may be used in combination with the carbon-based negative electrode active material.

The second active material layer may further include a negative electrode conductive material and a negative electrode binder.

The negative electrode conductive material may impart conductivity to the second active material layer, and any electronically conductive material that does not cause an adverse chemical change may be used. Examples of the negative electrode conductive material may include a carbon-based material such as at least one of natural graphite, artificial graphite, carbon black, acetylene black, Ketjen black, carbon fibers, carbon nanofibers, carbon nanotubes, or the like, a metal-based material in the form of a metal powder or metal fiber containing at least one of copper, nickel, aluminum, silver, or the like, a conductive polymer such as a polyphenylene derivative, or a mixture thereof.

The negative electrode binder attaches the negative electrode active material particles to each other, and also attaches the negative electrode active material to the second electrode plate 220. An example of the negative electrode binder may include a non-aqueous binder, an aqueous binder, a dry binder, or a combination thereof.

Examples of the non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

When the aqueous binder is used as the negative electrode binder, a cellulose-based compound may be further included to impart viscosity. The cellulose-based compound may be used by mixing one or more of carboxymethyl cellulose, hydroxypropyl methyl cellulose, methyl cellulose, or alkali metal salts thereof. As the alkali metal, at least one of Na, K, or Li may be used.

The dry binder may be or include a polymeric material capable of being fiberized, for example, at least one of polytetrafluoroethylene, polyvinylidene fluoride, a polyvinylidene fluoride-hexafluoropropylene copolymer, polyethylene oxide, or a combination thereof.

The second electrode plate 220 may be electrically connected to the can 100. For example, the second electrode plate 220 may be electrically connected to the can 100 by a second electrode tab 250. Since the second electrode plate 220 constitutes the negative electrode of the electrode assembly 200, the can 200 may constitute a negative electrode terminal of the battery 1. The second electrode tab 250 may be formed of or include a conductive metal material such as at least one of copper, a copper alloy, nickel, or a nickel alloy. The second electrode tab 250 may be disposed at a lower side of the electrode assembly 200, and both end portions of the second electrode tab 220 may be respectively connected to the second electrode plate 220 and the bottom portion 110 of the can 100. One end portion of the second electrode tab 250 may be directly connected to the second electrode plate 220. However, the second electrode plate 220 may be directly connected to the can 100 without the second electrode tab 250.

The separator 230 may be disposed between the first electrode plate 210 and the second electrode plate 220. The separator 230 may perform a function of reducing or preventing a short circuit between the first electrode plate 210 and the second electrode plate 220 while allowing the movement of lithium ions between the first electrode plate 210 and the second electrode plate 220.

As the separator 230, at least one of polyethylene, polypropylene, polyvinylidene fluoride, or a multilayer film of two or more layers thereof may be used, and a mixed multilayer film such as or including at least one of a polyethylene/polypropylene two-layer separator, a polyethylene/polypropylene/polyethylene three-layer separator, a polypropylene/polyethylene/polypropylene three-layer separator, or the like may be used.

The separator 230 may include a porous substrate and a coating layer containing an organic material, an inorganic material, or a combination thereof located on one surface or both surfaces of the porous substrate.

The porous substrate may be or include a polymer film formed of or including any one polymer such as or including at least one of polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride-based polymer or a (meth)acrylic-based polymer.

The inorganic material may include, but is not limited thereto, inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof.

The organic material and the inorganic material may be present as a mixture in a single coating layer, or may be present in a form in which a coating layer including an organic material and a coating layer including an inorganic material are stacked together.

A pair of separators 230 may be provided. The pair of separators 230 may to face both surfaces of the first electrode plate 210 or the second electrode plate 220, respectively. The pair of separators 230 may be wound around a winding axis together with the first electrode plate 210 and the second electrode plate 220.

The cap assembly 300 may be disposed at an upper end portion of the side wall portion 120, that is, the opening 130. The opening 130 of the can 100 may be sealed by the cap assembly 300, and to this end, the cap assembly 300 may be coupled to the can 100.

The cap assembly 300 may cover the opening 130 of the can 100. The cap assembly 300 may include the cap plate 310 and the terminal plate 320. That is, the cap plate 310 and the terminal plate 320 may cover the opening 130 of the can 100.

The cap plate 310 may be coupled to the can 100, for example, coupled to the side wall portion 120, to cover an outer area of the opening 130. The cap plate 310 may include a through hole exposing a central area of the opening 130. The cap plate 310 may be directly coupled to the side wall of the can 100 forming the opening 130 of the can 100 by, e.g., a welding process, or the like, to cover the outer area of the opening 130. The cap plate 310 joined to the can 100 may have the same polarity as the can 100, that is, the second electrode plate 220.

The terminal plate 320 may cover the central area of the opening 130, that is, an area corresponding to the through hole of the cap plate 310. The terminal plate 320 may be insulated and joined to the cap plate 310. Therefore, although not shown in the drawings, an insulating layer may be disposed between the cap plate 310 and the terminal plate 320. The insulating layer electrically insulates the cap plate 310 and the terminal plate 320 from each other. The type of material forming the insulating layer is not particularly limited, and the insulating layer may be formed of or include an insulating material such as, e.g., at least one of rubber, polyethylene (PE), polypropylene (PP), or polyethylene terephthalate (PET) as well as, e.g., an insulating ceramic.

A lower surface of the terminal plate 320 covering the central area of the opening 130 may be connected to the first electrode tab 240. Therefore, the terminal plate 320 may have the same polarity as the first electrode 210.

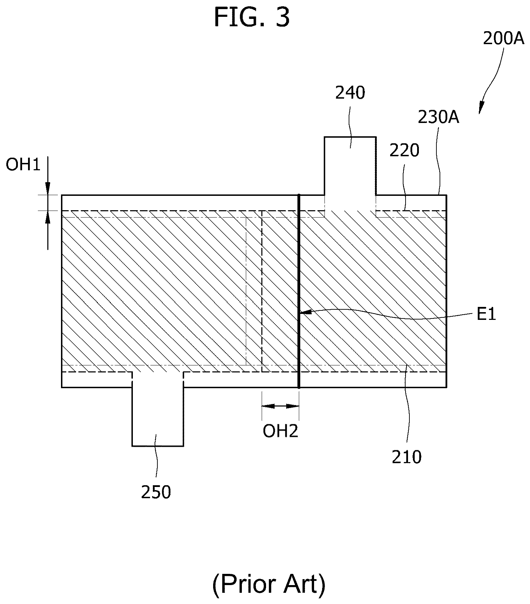

FIG. 3 is a front view schematically illustrating a configuration of a conventional jelly roll type electrode assembly. Referring to FIG. 3, a jelly roll type electrode assembly 200A includes a positive electrode plate 210, a negative electrode plate 220, and a separator 230A. The jelly roll type electrode assembly 200A may further include a first electrode tab 240 of which one end portion is connected to the positive electrode plate 210 and a second electrode tab 250 of which one end portion is connected to the negative electrode plate 220. Typically, in the jelly roll type electrode assembly 200A, since the separator 230A is disposed at the outermost side of the electrode assembly 200, the separator 230A visible from the front, that is, the outermost separator, is indicated by a solid line in FIG. 3. On the other hand, since the positive electrode plate 210 and the negative electrode plate 220 are covered by the separator 230A, the positive electrode plate 210 and the negative electrode plate 220 which are not visible from the front are indicated by a dotted line.

Generally, in an electrode assembly, there is a difference in sizes of a positive electrode plate, a negative electrode plate, and a separator. This is the same in the case of the jelly roll type electrode assembly 200A of FIG. 3. For example, in the jelly roll type electrode assembly 200A, the size of the positive electrode plate 210 may be the smallest and the size of the separator 230A may be the largest in a width direction as well as in a longitudinal direction. In addition, the negative electrode plate 220 may have an intermediate size between the size of the positive electrode plate 210 and the size of the separator 230A.

Accordingly, the separator 230A may have a first overhang portion OH1 in the width direction with respect to the negative electrode plate 220, and may have a second overhang portion OH2 in the longitudinal direction with respect to the negative electrode plate 220. The first overhang portion OH1 corresponds to upper and lower end portions in the width direction of the separator 230A, and the second overhang portion OH2 corresponds to a winding end portion of the circularly wound separator 230A. The size of each of the first and second overhang portions OH1 and OH2 may be different according to the type or size of the battery. For example, in the case of a coin-type battery, the first overhang portion OH1 may have a length of about 0.6 mm, and the second overhang portion OH2 may have a length of about 10 mm.

The jelly roll type electrode assembly 200A is inserted into the can 100 through the opening 130 of the upper end portion of the can 100 illustrated in FIG. 2. During the insertion process, the jelly roll type electrode assembly 200A may come into contact with the can 100 and, for example, in contact with an inner surface of the side wall portion 120, and thus, the outermost separator 230A may be subjected to an upward force due to friction with the side wall portion 120.

As a result, the overhang portions OH1 and OH2, particularly, the second overhang portion OH2, of the separator 230A may protrude upward. In particular, when a profile at an end E1 in the longitudinal direction of the separator 230A, that is, a cutting shape, has a linear shape parallel to the width direction, the second overhang portion OH2 may protrude further upward. The second overhang portion OH2 of the separator 230A protruding upward may interfere with the cap assembly 300 when the cap assembly 300 is disposed at the upper end of the can 100, that is, the opening 130 of the can 100, and the coupling surface is welded to be joined. Due to such interference, the separator 230 may be damaged, and defects such as pinholes may occur in the joining surface between the can 100 and the cap assembly 300.

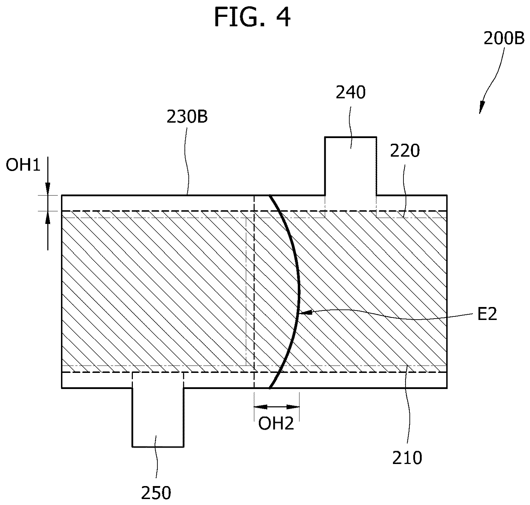

FIG. 4 is a front view schematically illustrating a configuration of an electrode assembly according to one example embodiment. Referring to FIG. 4, a jelly roll type electrode assembly 200B includes a positive electrode plate 210, a negative electrode plate 220, and a separator 230B. Compared to the conventional jelly roll type electrode assembly 200A shown in FIG. 3, components of a jelly roll type electrode assembly 200B of FIG. 4 are the same, but a cutting shape E2 of a separator 230B is different from the cutting shape E1 of the separator 230A of FIG. 3.

Referring to FIG. 4, the cutting shape E2 of the separator 230B may have a curved shape in which a central portion is more convex than an upper portion or a lower portion in the width direction. For example, the cutting shape E2 of the separator 230B may have a curved shape with a convex central portion instead of a straight line shape parallel to the width direction of the separator 230B. In this case, the cutting shape E2 may have an upper portion and a lower portion that are symmetrical to each other with respect to the central portion, but is not limited thereto.

The cutting shape E2 of the separator 230B is an example of a shape in which at least an upper end edge portion is removed from the second overhang portion OH2, which is a winding end portion of the separator 230B. In addition, the second overhang portion OH2 has a curved shape near the upper end. In FIG. 4, a lower end edge of the second overhang portion OH2 is removed in the same shape as the upper end. As a result, the cutting shape E2 of the separator 230B may have a shape in which a central portion is more convex than an upper portion or a lower portion.

As shown in FIG. 4, when an edge portion of the upper end of the second overhang portion OH2 is removed, in the process of inserting the jelly roll type electrode assembly 200B into the can 100 through the opening 130 of the upper end of the can 100, even when an upward force is applied to the separator 230B disposed at the outermost side by contacting the inner surface of the side wall portion 120 of the can 100, the second overhang portion OH2 may not protrude upward from the electrode assembly 200B. As a result, even when the cap assembly 300 is disposed on the opening 130 of the can 100 and the coupling surface is welded to be joined, the separator 230B may not interfere with the cap assembly 300.

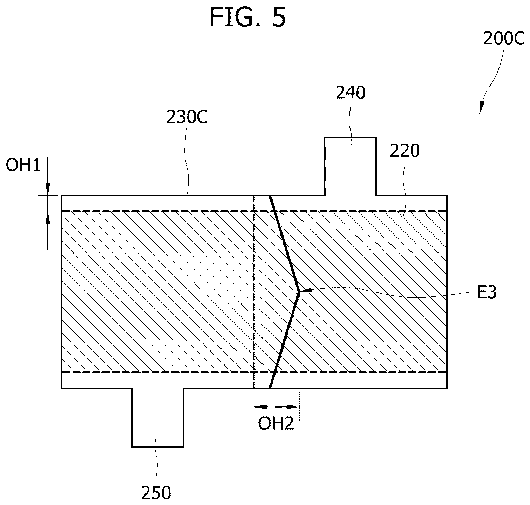

FIG. 5 is a front view schematically illustrating a configuration of an electrode assembly according to another example embodiment. Compared to the conventional jelly roll type electrode assembly 200A shown in FIG. 3, components of a jelly roll type electrode assembly 200C of FIG. 5 are the same, but a cutting shape E3 of a separator 230C is different from the cutting shape E1 of the separator 230A of FIG. 3. However, in FIG. 5, only the relatively large negative electrode plate 220 among the positive electrode plate 210 and the negative electrode plate 220 is indicated by a dotted line so that the technical idea of the example embodiment is more clearly shown, and the positive electrode plate 210 is not indicated.

Referring to FIG. 5, the cutting shape E3 of the separator 230C may have a straight shape in which a central portion is more convex than an upper portion or a lower portion in the width direction. For example, the cutting shape E3 of the separator 230C may have a straight line shape with a convex central portion instead of a straight line shape parallel to the width direction of the separator 230C. In this case, the cutting shape E3 may have an upper portion and a lower portion that are symmetrical to each other with respect to the central portion, but is not limited thereto.

The cutting shape E3 of the separator 230C is another example of a shape in which at least an upper end edge portion is removed from the second overhang portion OH2, which is a winding end portion of the separator 230C. In addition, the second overhang portion OH2 has a linear shape near the upper end. In FIG. 5, a lower end edge of the second overhang portion OH2 is removed in the same shape as the upper end edge. As a result, the cutting shape E3 of the separator 230C has a shape in which a central portion is more convex than an upper portion or a lower portion.

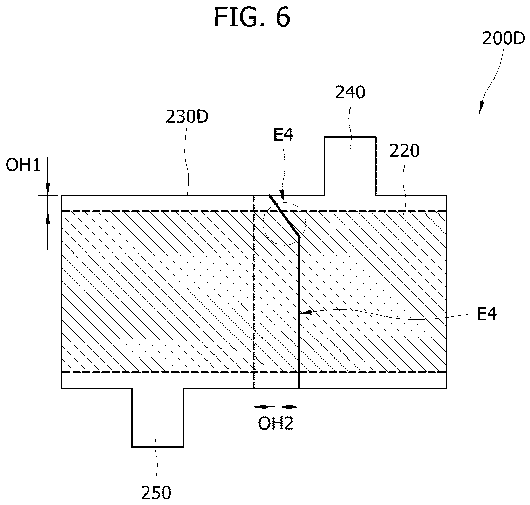

FIG. 6 is a front view schematically illustrating a configuration of a jelly roll type electrode assembly according to still another example embodiment. Compared to the conventional jelly roll type electrode assembly 200A shown in FIG. 3, components of a jelly roll type electrode assembly 200D of FIG. 6 are the same, but a cutting shape E4 of a separator 230D is different from the cutting shape E1 of the separator 230A of FIG. 3. However, in FIG. 6, only the relatively large negative electrode plate 220 among the positive electrode plate 210 and the negative electrode plate 220 is indicated by a dotted line so that the technical idea of the example embodiment is more clearly shown, and the positive electrode plate 210 is not indicated.

Referring to FIG. 6, the cutting shape E4 of the separator 230D has an overall linear shape parallel to the width direction, but may have a shape E4 in which only an upper end edge portion is removed. Accordingly, the separator 230D may have a cutting shape in which only an upper end edge portion is removed, that is, a chamfered shape E4. The chamfered shape E4 does not necessarily have to be linear, and may be curved. In addition, there is no particular limitation on the size of the chamfered shape E4, and it is sufficient to remove a portion of the second overhang portion OH2 from the separator 230D.

The chamfered shape E4 of the separator 230D is still another example of a shape in which at least an upper end edge portion is removed from the second overhang portion OH2, which is a winding end portion of the separator 230D. In FIG. 6, the second overhang portion OH2 is shown as being chamfered only at the upper end, but the present disclosure is not limited thereto. Unlike what is shown in FIG. 6, the second overhang portion OH2 may also be chamfered at the lower end.

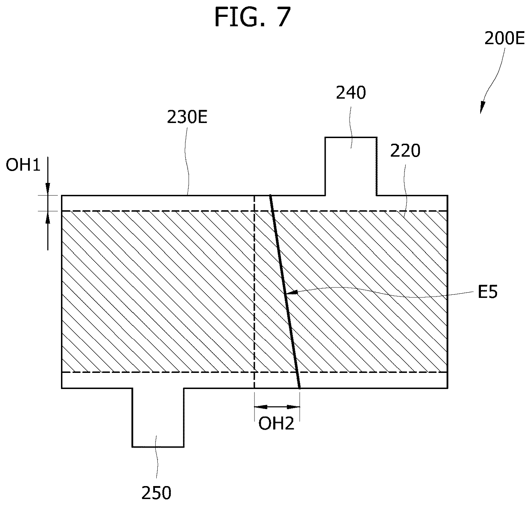

FIG. 7 is a front view schematically illustrating a configuration of a jelly roll type electrode assembly according to yet another example embodiment. Compared to the conventional jelly roll type electrode assembly 200A shown in FIG. 3, components of a jelly roll type electrode assembly 200E of FIG. 7 are the same, but a cutting shape E5 of a separator 230E is different from the cutting shape E1 of the separator 230A of FIG. 3. However, in FIG. 7, only the relatively large negative electrode plate 220 among the positive electrode plate 210 and the negative electrode plate 220 is indicated by a dotted line so that the technical idea of the example embodiment is more clearly shown, and the positive electrode plate 210 is not indicated.

Referring to FIG. 7, the cutting shape E5 of the separator 230E has a shape in which the width of the upper end is the smallest and the width of the lower end is the largest in the second overhang portion OH2 which is a winding end portion of the separator 230E. The cutting shape E5 of the separator 230E may also be yet another example of a shape in which at least an upper end edge is removed. In FIG. 7, the width of the cutting shape E5 is shown to continuously increase to the lower end of the second overhang portion OH2, but this is merely an example. Unlike what is shown in FIG. 7, the width of the second overhang portion OH2 may gradually increase from the upper end to the central portion, and the width may be constant from the central portion to the lower end.

According to an example embodiment of the present disclosure, when a jelly roll-type electrode assembly is accommodated in a can and a cap assembly is disposed and coupled to the top of the can, since interference due to an overhang portion of a separator does not occur, damage to the separator or a pinhole can be reduced or prevented from occurring on a joining surface between the can and the cap assembly.

However, the effects obtained through the present disclosure are not limited to the above-described effects, and other technical effects that are not mentioned are clearly understood by those skilled in the art from the description of the disclosure described below.

Although the present disclosure has been described with reference to the example embodiments shown in the drawings, these embodiments are merely examples, and it should be understood by those skilled in the art that various modifications and equivalents are possible.

Therefore, the scope of the present disclosure is determined by the claims recited below.

## Claims

1. An electrode assembly (200) formed by winding a laminate having a separator (230) interposed between a positive electrode plate (210) and a negative electrode plate (220) a plurality of times to have a winding center,
a) wherein a cutting shape (E2, E3, E4, E5) at a winding end portion of the separator (230) has a shape in which an upper end is removed compared to a cutting shape (E1) at the winding end portion of the separator (230) with a shape of a straight line parallel to a width direction of the separator (230), and/or
b) wherein the separator (230) has an overhang portion (OH2) in a longitudinal direction with respect to the positive electrode plate (210) and the negative electrode plate (220), and
a width in the longitudinal direction of an upper end of the overhang portion (OH2) is smaller than a width in the longitudinal direction of a central portion of the separator (230).

2. The electrode assembly (200) of claim 1, wherein the cutting shape (E2, E3, E4, E5) is such that an upper portion of the separator is removed in a curved line.

3. The electrode assembly (200) of claim 1, wherein the cutting shape (E2, E3, E4, E5) is such that an upper portion of the separator is removed in a straight line.

4. The electrode assembly (200) according to any of the preceding claims, wherein the cutting shape (E2, E3, E4, E5) is such that an edge portion is removed only from the upper end.

5. The electrode assembly (200) of any claims 1 to 3, wherein the cutting shape (E2, E3, E4, E5) is such that a lower end of the winding end portion of the separator is removed.

6. The electrode assembly (200) of any of claims 1 to 3 or 5, wherein the cutting shape (E2, E3, E4, E5) is vertically symmetrical in the width direction of the separator.

7. The electrode assembly (200) of any of claims 1 to 3 or 5 or 6, wherein the cutting shape (E2, E3, E4, E5) is such that a central portion is more convex than the upper end and the lower end in the width direction of the separator.

8. The electrode assembly (200) of any of claims 1, 2 or 6 or 7, wherein the cutting shape (E2, E3, E4, E5) is such that each of an upper portion and a lower portion of the separator is removed in a curved line.

9. The electrode assembly (200) of any claims 1, 3 or 6 or 7, wherein the cutting shape (E2, E3, E4, E5) is such that each of an upper portion and a lower portion of the separator is removed in a straight line.

10. The electrode assembly (200) of any of claims 1 to 3, and 5 to 9, wherein the cutting shape (E2, E3, E4, E5) is such that an edge portion is removed from each of the upper end and the lower end.

11. The electrode assembly (200) of any of claims 1 to 10, wherein a width direction boundary portion of the overhang portion (OH2) has a curved cutting shape or a straight cutting shape near the upper end.

12. The electrode assembly (200) of any of claims 1 to 4 , wherein the overhang portion (OH2) has a cutting shape in which an edge portion is removed only from an upper end of the central portion compared to a cutting shape (E1) at the winding end portion of the separator (230) with a shape of a straight line parallel to the width direction of the separator (230).

13. The electrode assembly (200) of claim 1 to 3, and 5 to 11, wherein a width direction boundary portion of the overhang portion (OH2) has a curved cutting shape or a straight cutting shape in which the central portion is more convex than an upper portion and a lower portion in the width direction of the separator (230).

14. A battery (1) comprising:
a can (100) having a cylindrical shape and an opening (130) having an open upper side; and
the electrode assembly (200) according to any one of claims 1 to 13.
